# EUROPEAN PATENT SPECIFICATION

(11) **EP 1 115 654 B1**
(45) Date of publication and mention of the grant of the patent: **11.12.2002**
(21) Application number: 98944926.9
(22) Date of filing: 23.09.1998
(51) Int. Cl.: C01B 25/32

(54) **PRODUCTION OF CALCIUM HYDROGENPHOSPHATE OR MONOCALCIUM PHOSPHATE FROM CALCIUM PHOSPHATE**
HERSTELLUNG VON DICALCIUMPHOSPHAT ODER MONOCALCIUMPHOSPHAT AUS CALCIUMPHOSPHAT
PRODUCTION D'HYDROGENOPHOSPHATE DE CALCIUM OU DE PHOSPHATE MONOCALCIQUE A PARTIR DE PHOSPHATE DE CALCIUM

(43) Date of publication of application: 18.07.2001
(73) Proprietor: de Waal, Willem P.D., Valleyview, Alberta T0H 3N0 (CA)
(72) Inventor: DE WAAL, Jan, C., 7150 Gordons Bay (ZA)
(74) Representative: Croft, Michael John
(86) International application number: CA9800898
(87) International publication number: WO00017100

(56) References cited:
- US-A- 2 728 635
- US-A- 3 391 993
- US-A- 4 012 491
- DATABASE WPI Section Ch, Week 9425 Derwent Publications Ltd., London, GB; Class C04, AN 94-208026 XP002102469 & SU 1 810 319 A (CASPIAN AREA ORE METALL PRODN ASSOC), 23 April 1993
- ULLMANN'S ENCYCLOPEDIA OF INDUSTRIAL CHEMISTRY , FIFTH EDITION, , vol. A 19, pages 498-499, XP002102468

## Description

### FIELD OF THE INVENTION

The present invention relates to methods for the manufacture of calcium hydrogenphosphate from calcium phosphate. It also relates to methods for the manufacture of monocalcium phosphate fertilizer, edible monocalcium phosphate and edible dicalcium phosphates.

### BACKGROUND OF THE INVENTION

Calcium phosphate, Ca₃(PO₄)₂, occurs in nature as rock phosphate ore, for example and is used as such as a source of fertilizer. It can also be converted with sulphuric acid to a mixture of calcium sulphate and phosphoric acid, or calcium dihydrogen phosphate, Ca(H₂PO₄)₂, the latter also being known as monocalcium phosphate. Calcium phosphate has a relatively low phosphorous content (20% m:m) while monocalcium phosphate, while having a much higher phosphorous content (26.5% m:m), is difficult to manufacture, and also expensive mainly because one of the by-products of the reaction by means of which it is so prepared, calcium sulphate, has to be discarded as a waste product.

Calcium hydrogenphosphate, CaHPO₄, also known as dicalciurn phosphate, has a relatively high phosphorous content (22.8% m:m) and may be used as a fertilizer. It is also used in animal licks as well as in the manufacture of certain toothpastes.

Therefore, there is a need in the art for an economical method of producing calcium hydrogenphosphate from calcium phosphate. There is a further need in the art for an economical method of producing monocalcium phosphate fertilizer from calcium phosphate and further producing edible products from the resultant fertilizer.

### SUMMARY AND DESCRIPTION OF THE INVENTION

In accordance with one aspect of the invention, a method of producing calcium hydrogenphosphate from calcium phosphate comprises the following steps:
a) reacting the calcium phosphate with a suitable mineral acid to form the corresponding calcium salt and phosphoric acid;
b) decomposing or reacting the calcium salt of step (a) with water or an alkali metal hydroxide to form calcium oxide or calcium hydroxide and the mineral acid of step (a), or its salt;
c) where the salt of the mineral acid is formed in step (b), electrolysing such salt to form the corresponding mineral acid together with an alkali;
d) recycling the mineral acid of step (b) or (c) to step (a); and
e) reacting the calcium oxide or calcium hydroxide of step (b) with the phosphoric acid of step (a) to form calcium hydrogenphoshate.

In one embodiment of the invention, the mineral acid comprises hydrochloric acid, so that calcium chloride is the calcium salt formed. The calcium chloride is then treated with water at an elevated temperature, preferably in the range of 1000 to 1200°C, to form calcium oxide and hydrochloric acid. Preferably, the aforesaid decomposition of the calcium chloride is carried out in a suitable cyclone.

In the preferred embodiment, the calcium chloride/water solution is damped in and heated to its boiling point before it is introduced to the cyclone, with care being taken to ensure that the resulting evaporation does not exceed a value commensurate with the solubility of calcium chloride in water. This ensures that there is sufficient water, in fact a slight excess, to take the decomposition to completion.

In an alternative embodiment of the invention, the mineral acid used is sulphuric acid, so that calcium sulphate is the salt which is formed. In this embodiment, the calcium sulphate is reacted with an alkali metal hydroxide, such as sodium hydroxide, to form calcium hydroxide and the alkali metal sulphate. The latter is then electrolysed to sulphuric acid together with the alkali metal hydroxide. The latter is then recycled for use in the step b) referred to above.

The preferred source for the calcium phosphate starting material is calcium phosphate rock ore.

It may therefore be appreciated by a person skilled in the art that the overall reactants required for the method of the present invention are calcium phosphate and the reagent required in step b). The only other requirement is either the energy required for obtaining the elevated temperature for the decomposition step in the one instance, or the electrical energy required for the reaction step in the other instance.

The following equations represent the chemical reactions occurring in the aforesaid two instances. In either instance, the specific reactions are illustrative of the invention and are not intended to be limiting of the scope of the invention.
In the one instance: 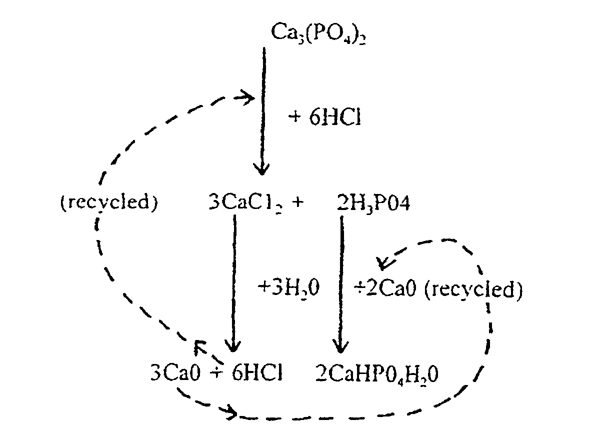 In the other instance:

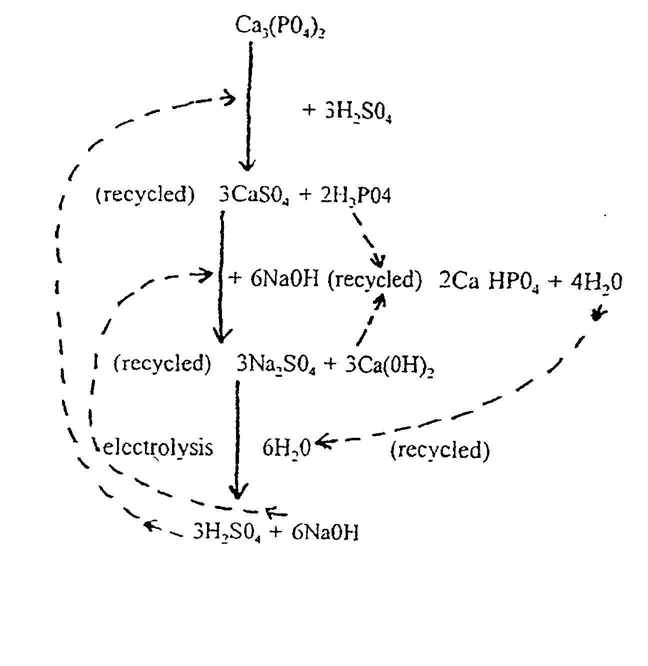

Apart from the calcium hydrogenphosphate. a small amount of excess calcium oxide is produced as a byproduct in the overall reaction in the one instance, and calcium hydroxide in the other instance, either of which can be used as a source for lime (CaO and Ca(OH)₂).

As will be apparent to those skilled in the art, various modifications, adaptations and variations of the within specific disclosure can be made without departing from the teachings of the present invention.

## Claims

1. A method for the manufacture of calcium hydrogenphosphate from calcium phosphate which comprises:
(1) reacting the calcium phosphate with a suitable mineral acid to form the corresponding calcium salt and phosphoric acid;
(2) decomposing or reacting the calcium salt of step (1) with water or an alkali metal hydroxide to form calcium oxide or calcium hydroxide and the mineral acid of step (1), or its salt;
(3) where the salt of the mineral acid is formed in step (2), electrolysing such salt to form the corresponding mineral acid together with an alkali;
(4) recycling the mineral acid of step (2) or (3) to step (1); and
(5) reacting the calcium oxide or calcium hydroxide of step (2) with the phosphoric acid of step (1) to form calcium hydrogenphosphate.

2. The method of claim 1 in which the mineral acid used in step (1) comprises hydrochloric acid, so that calcium chloride is the salt which is formed in step (1).

3. The method of claim 2 in which step (2) is carried out by treating such calcium chloride with water at an elevated temperature to form calcium oxide and hydrochloric acid.

4. The method of claim 3 in which the elevated temperature is in the order of 1000-1200°C.

5. The method of claim 3 or 4 in which the decomposition of the calcium chloride with water at the aforesaid temperature is carried out in a cyclone.

6. The method of claim 5 in which the calcium chloride/water solution is damped in and heated to boiling point before it is introduced to the cyclone, care being taken to ensure that the resulting evaporation does not exceed a value commensurate with the solubility of calcium chloride in water in order to ensure that there is sufficient water (slight excess) to take the decomposition to completion.

7. The method of claim 1 in which the mineral acid used in step (1) comprises sulphuric acid so that calcium sulphate is the salt which is formed in step (1).

8. The method of claim 7 in which step (2) is carried out by treating such calcium sulphate with an alkali metal hydroxide such as sodium hydroxide to form calcium hydroxide and the alkali metal sulphate.

9. The method of any one of the preceding claims wherein calcium phosphate rock ore is utilized as source of calcium phosphate.

## Patentansprüche

1. Ein Verfahren zur Herstellung von Calciumhydrogenphosphat aus Calciumphosphat, umfassend:
(1) Umsetzen des Calciumphosphats mit einer geeigneten Mineralsäure zur Bildung des entsprechenden Calciumsalzes und Phosphorsäure;
(2) Zersetzen oder Umsetzen des Caiciumsalzes von Schritt (1) mit Wasser oder einem Alkalimetallhydroxid zur Bildung von Calciumoxid oder Calciumhydroxid und der Mineralsäure von Schritt (1), oder deren Salz;
(3) wenn in Schritt (2) das Salz der Mineralsäure gebildet wird, Elektrolysieren dieses Salzes zur Bildung der entsprechenden Mineralsäure zusammen mit einer Alkaliverbindung;
(4) Rückführen der Mineralsäure von Schritt (2) oder (3) zu Schritt (1); und
(5) Umsetzen des Calciumoxids oder Calciumhydroxids von Schritt (2) mit der Phosphorsäure von Schritt (1) zur Bildung von Calciumhydrogenphosphat.

2. Verfahren nach Anspruch 1, bei dem die in Schritt (1) verwendete Mineralsäure Chlorwasserstoffsäure umfasst, so dass das in Schritt (1) gebildete Salz Calciumchlorid ist.

3. Verfahren nach Anspruch 2, bei dem Schritt (2) durch Behandeln des Calciumchlorids mit Wasser bei einer erhöhten Temperatur zur Bildung von Calciumoxid und Chlorwasserstoffsäure durchgeführt wird.

4. Verfahren nach Anspruch 3, bei dem die erhöhte Temperatur im Bereich von 1000°C bis 1200°C liegt.

5. Verfahren nach Anspruch 3 oder 4, bei dem die Zersetzung des Calciumchlorids mit Wasser bei der vorstehend genannten Temperatur in einem Zyklon durchgeführt wird.

6. Verfahren nach Anspruch 5, bei dem die Calciumchlorid/Wasser-Lösung befeuchtet und zum Siedepunkt erhitzt wird, bevor sie in den Zyklon eingeführt wird, wobei sichergestellt wird, dass die resultierende Verdampfung nicht einen Wert übersteigt, welcher der Löslichkeit des Calciumchlorids in Wasser entspricht, um sicherzustellen, dass ausreichend Wasser (geringer Überschuss) zum Vervollständigen der Zersetzung vorhanden ist.

7. Verfahren nach Anspruch 1, bei dem die in Schritt (1) verwendete Mineralsäure Schwefelsäure umfasst, so dass das in Schritt (1) gebildete Salz Calciumsulfat ist.

8. Verfahren nach Anspruch 7, bei dem Schritt (2) durch Behandeln des Calciumsulfats mit einem Alkalimetallhydroxid wie z.B. Natriumhydroxid zur Bildung von Calciumhydroxid und des Alkalimetallsulfats durchgeführt wird.

9. Verfahren nach einem der vorstehenden Ansprüche, bei dem als Calciumphosphatquelle Calciumphosphat-Gesteinserz verwendet wird.

## Revendications

1. Procédé de fabrication d'hydrogénophosphate de calcium à partir de phosphate de calcium, qui comprend les étapes consistant à :
(1) faire réagir le phosphate de calcium avec un acide minéral approprié pour former le sel de calcium correspondant et de l'acide phosphorique ;
(2) décomposer ou faire réagir le sel de calcium de l'étape (1) avec de l'eau ou un hydroxyde de métal alcalin pour former de l'oxyde de calcium ou de l'hydroxyde de calcium et l'acide minéral de l'étape (1), ou son sel ;
(3) lorsque le sel de l'acide minéral est formé dans l'étape (2), réaliser une électrolyse de ce sel pour former l'acide minéral correspondant avec une base ;
(4) recycler l'acide minéral de l'étape (2) ou (3) dans l'étape (1) ; et
(5) faire réagir l'oxyde de calcium ou l'hydroxyde de calcium de l'étape (2) avec l'acide phosphorique de l'étape (1) pour former de l'hydrogénophosphate de calcium.

2. Procédé selon la revendication 1, dans lequel l'acide minéral utilisé dans l'étape (1) comprend l'acide chlorhydrique, de sorte que le chlorure de calcium est le sel qui est formé dans l'étape (1).

3. Procédé selon la revendication 2, dans lequel l'étape (2) est réalisée par traitement de ce chlorure de calcium avec de l'eau à une température élevée pour former de l'oxyde de calcium et de l'acide chlorhydrique.

4. Procédé selon la revendication 3, dans lequel la température élevée est de l'ordre de 1000 à 1200°C.

5. Procédé selon la revendication 3 ou 4, dans lequel la décomposition du chlorure de calcium avec de l'eau à la température mentionnée précédemment est réalisée dans un cyclone.

6. Procédé selon la revendication 5, dans lequel la solution chlorure de calcium/eau est humidifiée et chauffée au point d'ébullition avant d'être introduite dans le cyclone, en prenant soin que l'évaporation résultante ne dépasse pas une valeur proportionnelle à la solubilité du chlorure de calcium dans l'eau, afin d'assurer qu'une quantité d'eau suffisante (léger excès) est présente pour achever la décomposition.

7. Procédé selon la revendication 1, dans lequel l'acide minéral utilisé dans l'étape (1) comprend l'acide sulfurique de sorte que le sulfate de calcium est le sel qui est formé dans l'étape (1).

8. Procédé selon la revendication 7, dans lequel l'étape (2) est réalisée par traitement de ce sulfate de calcium avec un hydroxyde de métal alcalin, tel que l'hydroxyde de sodium, pour former de l'hydroxyde de calcium et le sulfate de métal alcalin.

9. Procédé selon l'une quelconque des revendications précédentes, dans lequel de la roche de phosphate de calcium est utilisée comme source de phosphate de calcium.
